# EUROPÄISCHE PATENTSCHRIFT

(11) **EP 2 485 153 B1**
(45) Veröffentlichungstag und Bekanntmachung des Hinweises auf die Patenterteilung: **15.01.2014**
(21) Anmeldenummer: 12165631.8
(22) Anmeldetag: 24.02.2010
(51) Int. Cl.: G06F 13/362

(54) **Schaltungsanordnungen und Verfahren zur Steuerung eines Datenaustauschs in einer Schaltungsanordnung**
Switch assemblies and method for controlling data exchange in a switch assembly
Circuits et procédé de commande d'un échange de données dans un circuit

(30) Priorität: 26.03.2009 DE 102009001898
(43) Veröffentlichungstag der Anmeldung: 08.08.2012
(62) Teilanmeldung aus: 10707864.4
(73) Patentinhaber: Robert Bosch GmbH, 70442 Stuttgart (DE)
(72) Erfinder: Boehl, Eberhard, 72768 Reutlingen (DE); Bartholomae, Ruben, 72766 Reutlingen (DE); Scheurer, Uwe, 72762 Reutlingen (DE)

(56) Entgegenhaltungen:
- US-A- 5 455 917
- US-A1- 2003 105 899
- US-B1- 6 457 078

## Beschreibung

### Stand der Technik

Die Erfindung betrifft Schaltungsanordnungen und Verfahren zur Steuerung eines Datenaustauschs in einer Schaltungsanordnung.

In Daten-verarbeitenden Systemen (Rechner- und Mikroprozessor-Systemen, Steuereinheiten, peripheren Einheiten sowie andere informationsverarbeitenden Systeme) werden zum Zwecke des Datenaustauschs häufig Bussysteme benutzt. Ein solches Bussystem ist der AMBA-Bus mit seinen Varianten AHB, ASB und APB (www.arm.com/products/solutions/AMBAHomePage.html). Der AHB-Bus ist ein Multi-Master Bus, bei dem die einzelnen Master den Bus durch einen Bus-Request anfordern können. Der Arbiter entscheidet bei mehreren Anforderungen, welcher Master den Bus für seinen Datentransfer zugeteilt bekommt. Der ausgewählte Master spricht über eine Adresse einen Slave an, zu dem er Daten über einen Schreibbus übertragen kann oder von dem er über einen Lesebus Daten erhält. Die Datenübertragung kann mehrere Taktzyklen dauern und wird durch ein Ready-Signal beendet, das den Bus für den nächsten Master-Request wieder freigibt. Als Master könnte beispielsweise die CPU (central processing unit) oder eine DMA (direct memory access) fungieren, die Daten von einem Speicher holen oder zu einer peripheren Einheit übertragen. Dabei sind die Übertragungswege jeweils durch eine Adresse gesteuert, die sich ständig ändern kann.

Eine andere Datenübertragungsmöglichkeit ist das Daten-Routing, wie es in der PCT/EP2008/060493 beschrieben ist, welche das Problem der Verteilung von Daten an konfigurierbare (zur Laufzeit feste) Adressen löst. Dabei werden von einer Datenquelle (Source) die vorhandenen Daten nacheinander an eine feste Adresse in einen RAM (random access memory, Speicher mit wahlfreiem Zugriff) geschrieben, von wo sich die Datensenke (Destination) zyklisch die Daten abholt. Bei jeder Abholung der Daten wird der betreffende Datenbereich als gelesen markiert und damit frei für die nächsten Daten aus der gleichen Quelle. Diese Art der Datenverteilung ist dann vorteilhaft, wenn eine feste Verbindung zwischen einer Datenquelle und einer Datensenke besteht und beliebig häufig Daten ausgetauscht werden.

Bei dem Datenaustausch mit Hilfe eines AMBA-Bussystems meldet jeder Master eine Request an das Bussystem, und von einem Arbiter wird entschieden, welcher Master den Bus zugeteilt bekommt. Der Datentransfer ist dadurch sehr flexibel, aber auch sehr aufwändig. Demgegenüber ist das (o.g.) Daten-Routing einfacher, weil einfach jeder Teilnehmer nacheinander abgefragt wird, ob er eine Request hat und dann nacheinander bedient wird. Es werden dabei Write Requests (Schreibeanforderungen) und Read Requests (Leseanforderungen) für den RAM unterschieden. Bei einer Write Request werden die Daten von der Quelle genau dann abgeholt und in den RAM geschrieben, wenn die Zieladresse im RAM frei ist. Umgekehrt werden die Daten bei einer Read Request nur dann bedient, wenn gültige Daten vorliegen und das Datum wird beim Lesen als gelesen markiert.

Ein Nachteil dieses Routings ist, dass man für jeden Datentransfer von einer Quelle zu einer Senke k Takte zum Schreiben in den RAM braucht und zusätzlich I Takte zum Lesen aus dem RAM benötigt. Werden nacheinander n Datenquellen und m Datensenken bedient, so benötigt ein Durchlauf bis zu t=n*k + m*l Takte. Falls keine Request vorliegt, verkürzt sich die Abfrage der Quelle oder Senke auf null Takte. Damit ist die Zykluszeit, d.h. die Zeit bis die gleiche Quelle oder Senke erneut bedient wird, von der Anzahl der Requests abhängig. Für manche Anwendungen ist die Zykluszeit zu groß und für andere ist die variable Zykluszeit ungünstig.

Aus der US 2003/0105899 A1 ist eine Multiprozessor-Infrastruktur bekannt. Das dort beschriebene System weist mehrere Mastereinheiten sowie mehrere Zieleinheiten auf. Eine Busarbitrierungslogikeinheit wird ausgenutzt, um Informationsaustausch zwischen den Einheiten über ein Bussystem zu kontrollieren.

### Offenbarung der Erfindung

### Vorteile der Erfindung

Die erfindungsgemäßen Verfahren zur Steuerung eines Datenaustauschs in einer Schaltungsanordnung bzw. die erfindungsgemäße Schaltungsanordnungen gemäß den unabhängigen Ansprüchen haben gegenüber dem Daten-Routing nach Stand der Technik den Vorteil, dass sie den RAM als Zwischenspeicher einsparen und die Zykluszeit auf t=m Takte verkürzen, weil nur die Datensenken abgefragt werden und jeweils nur ein Takt für jede Abfrage benötigt wird. Weiterhin kann die Zykluszeit konstant gewählt werden, weil die Abfrage der Datensenken unabhängig davon sein kann, ob eine Request vorliegt oder nicht.

Gegenüber dem AMBA-Bus aus dem Stand der Technik wird dagegen viel Schaltungsaufwand gespart, z.B. weil eine einfachere Arbitrierung nach dem round-robin-Prinzip möglich ist, weil für die Arbitrierung nicht in Betracht gezogen werden muss, ob eine Request vorliegt, weil jeweils nur ein Lesezugriff vorgesehen sein kann, weil das Lesen immer von konfigurierbaren (zur Laufzeit festen) Adressen erfolgen kann und weil die Adressen für die n Datenquellen nur Id(n) Bits benötigen können (Durchnummerierung der Quellen).

Das Verfahren nach Hauptanspruch 1 ist somit besonders schnell und benötigt einen verhältnismäßig kleinen Schaltungsaufwand im Vergleich zum Stand der Technik. Weitere Vorteile und Verbesserungen ergeben sich durch die Merkmale der abhängigen Ansprüche.

Beim Verfahren nach Hauptanspruch 1 arbitriert die Arbitrierungseinheit im Fall eines vorgegebenen Ereignisses (z.B. bestimmt/ gesteuert durch die CPU) eine bestimmte Datensenke bzw. eine bestimmte Datenquelle und wählt erst nach dieser erzwungenen Arbitrierung die folgenden Datensenken bzw. Datenquellen weiter nach der vorgegebenen Reihenfolge aus. Dadurch kann die vorgegebene Reihenfolge im Falle eines wichtigen Ereignisses, z.B. eines zeitkritischen Ereignisses flexibel verlassen werden und das Verfahren mit fester Reihenfolge nach dieser außerplanmäßigen Arbitrierung wieder aufgenommen werden.

In einer vorteilhaften Ausgestaltung fungiert mindestens ein Datenknoten sowohl als mindestens eine Datensenke als auch als mindestens eine Datenquelle. Das Verfahren ist damit nicht auf reine Datensenken bzw. Datenquellen beschränkt. Für den erfindungsgemäßen Datenaustausch ist eine solche funktionale Einheit in die entsprechende Anzahl von Datensenken und Datenquellen aufgeteilt zu betrachten.

Weiterhin vorteilhaft ist, wenn der Datenaustausch zwischen mehreren (Teil-)Mengen von Datensenken und / oder mehreren (Teil-)Mengen von Datenquellen stattfinden kann durch den Einsatz von jeweils mindestens einer Arbitrierungseinheit pro Datensenken-(Teil-)Menge (im Fall der Datensenken-Arbitrierung) bzw. pro Datenquellen-(Teil-)Menge (im Fall der Datenquellen-Arbitrierung). Dadurch ist ein flexiblerer Datentransfer zwischen verschiedenen Gruppen von Datenquellen und -senken möglich. In einer weiteren vorteilhaften Ausgestaltung können sich einige der mehreren (Teil-) Mengen auch überschneiden für einen noch flexibleren Datenaustausch.

In einem weiteren vorteilhaften Ausführungsbeispiel beeinflusst im Fall einer Datensenkenarbitrierung das Anforderungssignal der ausgewählten (ersten) Datensenke die Gültigkeitsinformation der ausgewählten (ersten) Datenquelle. Es kann also z.B. durch die Nachricht der Datensenke an die Quelle festgelegt werden, ob die Nachricht in der Datenquelle gültig bleiben oder ungültig werden soll, wodurch z.B. erwünschte Mehrfach-Lesevorgänge ermöglicht werden können, aber auch ungewünschte Mehrfach-Lesevorgänge verhindert werden können. Genauso wird im Fall der Datenquellenarbitrierung eine Beeinflussung der Gültigkeitsinformation der ausgewählten (ersten) Datenquelle durch ein Quittungssignal der ausgewählten (ersten) Datensenke in einer vorteilhaften Ausgestaltung vorgesehen mit den gleichen Vorteilen wie gerade im Fall der Datensenken-Arbitrierung beschrieben.

Auch vorteilhaft ist, wenn es die Möglichkeit gibt, dass ein Anforderungssignal eines Datenknoten (speziell einer Datensenke) sich auf das Weiterschalten der Arbitierungseinheit auswirken kann. Dadurch wird zwar möglicherweise der Vorteil einer konstanten Zykluszeit aufgegeben, allerdings ergeben sich vorteilhafterweise weitere Übertragungsoptionen, z.B. dass zwischen einer Datenquellen und einer Datensenke für eine gewissen Zeit ein Dauerdatentransfer stattfindet, währenddessen die Arbitierungseinheit nicht weiterzählt.

In einem besonders vorteilhaften Ausführungsbeispiel können Daten des Datenaustausches durch Pipelineregister oder ähnliche Verzögerungseinheiten bzw. Verzögerungsverfahren in der Schaltungsanordnung verzögert werden, damit ein erfindungsgemäßer Datenaustausch auch möglich ist, wenn Schreib- und/oder Lesevorgänge mehr Zeit benötigen als durch den Takt der Arbitrierung zugeteilt ist.

### Zeichnungen

Ausführungsbeispiele der Erfindung sind in den Zeichnungen dargestellt und in der nachfolgenden Beschreibung näher erläutert. Die Zeichnungen sind lediglich beispielhaft und schränken den allgemeinen Erfindungsgedanken nicht ein. Dabei kennzeichnen übereinstimmende letzte zwei Ziffern der Bezugszeichen gleiche bzw. vergleichbare Elemente.

Dabei zeigen:
- Figur 1: eine Schaltungsanordnung für einen Datenaustausch mit Arbitrierung der Datensenken durch einen Zähler,
- Figur 2: eine Schaltungsanordnung für einen Datenaustausch mit Pipelineregistern,
- Figur 3: eine Schaltungsanordnung für einen Datenaustausch mit parallelen Zugriffsmöglichkeiten, und
- Figur 4: eine Schaltungsanordnung für einen Datenaustausch mit Arbitrierung der Datenquellen durch einen Zähler.

### Beschreibung der Ausführungsbeispiele

In der Beschreibung werden die Begriffe Datenquelle, Datensenke und Datenknoten in folgender Bedeutung verwendet: Eine Datenquelle ist ein Datenknoten, der Daten bereitstellt und eine Datensenke ist ein Datenknoten, der Daten empfängt. Es wird darauf hingewiesen, dass eine funktionale Einheit, die beispielsweise in einem Gehäuse oder einem Chip angebracht ist, sowohl als Datenquelle als auch als Datensenke fungieren kann und das auch mehrfach. Diese Einheit ist dann für den erfindungsgemäßen Datenaustausch zwischen Datenquellen und Datensenken in die entsprechende Anzahl von Datensenken und Datenquellen aufgeteilt zu betrachten.

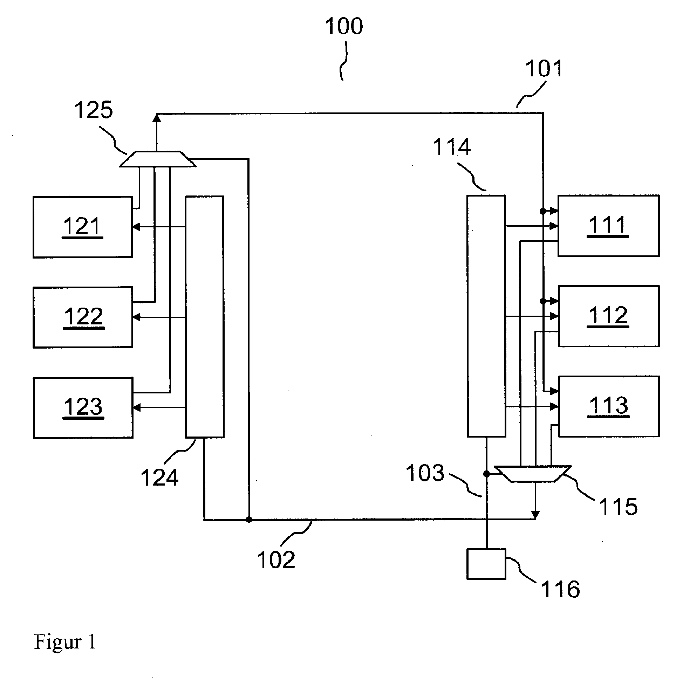

Figur 1 zeigt eine Ausführungsform einer erfindungsgemäßen Schaltungsanordnung. Dabei weist die Schaltungsanordnung 100 Datensenken 111, 112 und 113 und Datenquellen 121, 122 und 123 auf. Den Datensenken 111, 112 und 113 sind ein 1-aus-m-Dekoder 114, ein Multiplexer 115 und ein Zähler 116 zugeordnet, den Datenquellen 121, 122, 123 sind ein 1-aus-n-Dekoder 124 und ein Multiplexer 125 zugeordnet. Der 1-aus-m-Dekoder 114 hat Zugriff auf die Datensenken 111, 112 und 113 zu einer adressgesteuerten Auswahl der Datensenken 111, 112 und 113 mit Hilfe des Selekt-Signals und ist über eine Kommunikationsverbindung 103 sowohl mit einem Selekteingang des Multiplexers 115 als auch mit dem Zähler 116 verbunden. Die Datensenken 111, 112 und 113 sind jeweils mit einem Eingang des Multiplexers 115 verbunden. Der Ausgang des Multiplexers 115 ist mit einer Kommunikationsverbindung 102 verbunden, welche Kommunikationsverbindung 102 sowohl mit dem 1-aus-n-Dekoder 124 als auch mit einem Selekteingang des Multiplexers 125 verbunden ist. Der 1-aus-n-Dekoder 124 hat Zugriff auf die Datenquellen 121, 122 und 123 zu einer adressgesteuerten Auswahl der Datenquellen 121, 122 und 123. Die Datenquellen 121, 122 und 123 sind jeweils mit einem Eingang des Multiplexers 125 verbunden. Weiterhin ist der Ausgang des Multiplexers 125 mit einer Kommunikationsverbindung 101 verbunden, welche Kommunikationsleitung 101 jeweils mit den Datensenken 111, 112 und 113 verbunden ist.

Die erfindungsgemäße Schaltungsanordnung besteht allgemein aus n + m Datenknoten (Anzahl Datenquellen n>0, Anzahl Datensenken m>0), in dem Ausführungsbeispiel in Figur 1 aus 3+3=6 Datenknoten 111, 112, 113, 121, 122 und 123. Dabei ist n=3 die Anzahl der Datenquellen 121, 122 und 123 und m=3 die Anzahl der Datensenken 111, 112, 113. Weiterhin gehört zu der Schaltungsanordnung eine Arbitrierungseinheit, in Figur 1 beispielsweise ein modulo-m-Zähler 116 als Auswahleinheit zur Arbitrierung. Der Zähler 116 inkrementiert in diesem Ausführungsbeispiel mit einem vorgebbaren Takt den Wert des Zählers 116 bis zu m-1 und beginnt dann wieder bei 0. Über den 1-aus-m-Dekoder 114 wird mit jedem Zustand des Zählers 116 genau eine Datensenke aus den Datensenken 111, 112, 113 ausgewählt. Diese ausgewählte Datensenke gibt eine Adresse und ein Lese-Anforderungssignal (Read-Request-Signal) an den Multiplexer 115, welcher Multiplexer 115 die Daten des selektierten Blocks der ausgewählten Datensenke zusammen mit der Adresse und dem Read-Request-Signal über die Kommunikationsverbindung 102 weiterleitet.

In dem 1-aus-n-Dekoder 124 wird aus der Adresse genau eine Datenquelle aus den Datenquellen 121, 122 und 123 ausgewählt und dieser Datenquelle das Read Request mit dem Daten-Bereit-Signals zur Verfügung gestellt. Aus dem Read-Request und dem Daten-Bereit-Signal wird ein Gültigkeitssignal gebildet, das genau dann gültige Daten kennzeichnet, wenn sowohl das Read-Request als auch das Daten-Bereit-Signal aktiv sind. Diese ausgewählte Datenquelle gibt die angeforderten Daten an den Multiplexer 125 aus und dieser sorgt dafür, dass genau die Daten der ausgewählten Datenquelle zusammen mit der Gültigkeitsinformation (Quittungssignal) über die Kommunikationsverbindung 101 zu allen Datensenken 111, 112, 113 weitergeleitet werden. Die ausgewählte Datensenke speichert die gültigen Daten ab.

In Figur 1 sind zur Auswahl der Datensenken 111, 112 und 113 und der Datenquellen 121, 122 und 123 ein 1-aus-m-Dekoder 114, ein 1-aus-n-Dekoder 124, Multiplexer 125 und 115 sowie zur Arbitrierung der Datensenken 111, 112 und 113 ein Zähler 116 beispielhaft aufgeführt. Alternativ dazu lassen sich auch andere Schaltungsordnungen verwirklichen, welche die Auswahl und Arbitrierung eines erfindungsmäßigen Datenaustausches durchführen können.

In dem vorgestellten Ausgestaltungsbeispiel ist es vorteilhaft, wenn das Read-Request-Signal der ausgewählten Datensenke die Gültigkeitsinformation der Daten der ausgewählten Datenquelle beeinflusst. Da der Zähler 116 nacheinander jede Datensenke auswählt, auch wenn keine Anforderung vorliegt, wird hierdurch das ungewollte Abspeichern und damit das fehlerhafte Überschreiben von Daten verhindert. Liegt eine Read-Request vor, so wird in der Datenquelle das Datum als gelesen markiert und es wird damit ungültig, bis ein neues Datum von der Quelle bereitgestellt wird (Gültigkeitsinformation invalid muss wechseln nach valid). Das mit den Daten übertragene Gültigkeitssignal ist das Quittungssignal für eine erfolgreiche Übertragung und dient als Abspeichersignal in der Datensenke. In einer weiteren Ausgestaltung der Erfindung ist es möglich, das jeweilige Read-Request-Signal der Datensenke durch zwei Bits xy als Anforderungssignal zu wählen. Dabei können die 4 möglichen Zustände der zwei Bits xy z.B. folgende Bedeutung haben, wie in Tabelle 1 beschrieben.

**Tabelle 1: Möglichkeit der Codierung von Read Request Bits x und y bei Arbitrierung der Datensenke**

| Wert | x y | Name | Bedeutung |
|---|---|---|---|
| 0 | 0 0 | No request | keine Daten angefordert von Datensenke |
| 1 | 0 1 | Single read | Angeforderte Daten werden nach Bereitstellung in Quelle ungültig. |
| 2 | 1 0 | Burst read | Angeforderte Daten werden nach Bereitstellung in Quelle ungültig; neue Daten unmittelbar bereitgestellt; Zähler zur Arbitrierung wird nicht inkrementiert. |
| 3 | 1 1 | Multiple read | Angeforderte Daten bleiben nach Bereitstellung in Quelle gültig. |

Unter Wert wird in Tabelle 1 dabei das Dezimaläquivalent der beiden Bits xy verstanden. Bei dem Wert 0 liegt keine Leseanforderung vor, das Datum bleibt gültig an der Quelle erhalten. Bei dem Wert 3 werden mehrere Lesevorgänge in Folge vorgesehen, das Datum bleibt in diesem Fall ebenfalls gültig. In den anderen beiden Fällen (Wert 1 und Wert 2) wird das Datum nach dem Lesen ungültig und muss an der gleichen Adresse für den nächsten Lesevorgang ersetzt werden. Dabei entspricht der Fall mit Wert 1 z.B. dem zu Figur 1 beschriebenen Datenaustausch -Vorgang.

Im Falle eines burst read (Wert = 2) sollen die jeweils nächsten Daten schon im nächsten Taktzyklus bereitstehen. Es ist in diesem Falle auch möglich, dass die neuen Daten von einer anderen Quelle bereitgestellt werden, indem die ausgesendete Adresse wechselt. Weiterhin ist zu beachten, dass der Zähler 116 nicht inkrementiert wird, bzw. allgemein die Arbitrierungseinheit nicht weiterläuft, solange ein burst read aktiv ist. Es bleibt also eine bestimmte Datensenke ausgewählt. Vorteilhafterweise ist durch die Implementation eines solchen Ausgestaltungsbeispiel also die Funktion eines burst reads realisierbar, allerdings ist in einer Ausgestaltung mit der beschriebenen burst-Option keine konstante Zykluszeit mehr angebbar, wie sie es im einfachen Fall (nur "no request" oder "single read") vorteilhafterweise war.

Die Steuersignale x und y werden zusammen mit der dazugehörigen Adresse übertragen und auch im Falle einer Verzögerung (z.B. durch Pipelinestufen, siehe auch Beschreibung weiter unten) in gleicher Weise verzögert. Das trifft ebenso zu für das Gültigkeitssignal im Zusammenhang mit den übertragenen Daten. Im Falle eines burst-Zugriffs kann der maximale Datendurchsatz von einem Datum pro Takt erreicht werden, wenn sowohl Datenquelle als auch Datensenke diese Geschwindigkeit unterstützen.

Selbstverständlich sind auch andere, insbesondere aufwändigere Anforderungssignalvarianten möglich, und die vorgestellte 2-Bit-Variante bzw. die noch einfachere 1-Bit-Variante ("no request" oder "single read") stellen nur die einfachsten Grundvarianten dar.

Der zur Arbitrierung benutzte Zähler 116 kann in einer weiteren vorteilhaften Ausgestaltung des erfindungsgemäßen Verfahrens bzw. der erfindungsgemäßen Schaltungsanordnung in einem beliebigen Code zählen oder muss nicht in jedem Zyklus alle Datensenken selektieren, indem er zum Beispiel schon wieder auf 0 gesetzt wird, bevor er den Wert m-1 erreicht. Dadurch ist es beispielsweise möglich, dass manche Datensenken häufiger bedient werden als andere. Man kann in zeitkritischen Systemen dadurch ggf. auf eine Aufteilung mit zusätzlicher Hardware zur Parallelisierung verzichten.

Es ist außerdem in einem weiteren Ausführungsbeispiel eine Arbitrierung möglich, die je nach Anforderung für bestimmte Datensenken eine Beschleunigung bedeutet, wie zum Beispiel ereignisgesteuertes Setzen des Zählers 116 auf einen bestimmten Wert und die dann von dort aus weitere Inkrementierung. So kann zum Beispiel eine extern vorhandene CPU in Abhängigkeit eines bestimmten Ereignisses den Zähler 116 auf einen bestimmten Wert setzen und dadurch die Arbitrierung einer Senke erzwingen, wobei andere Senken dann ggf. übersprungen werden. Von dem gesetzten Wert erfolgt dann beispielsweise das Hochzählen in der sonst üblichen Form. Das gleiche Prinzip gilt natürlich auch in dem weiter unten beschriebenen Fall der Quellenarbitrierung für das Erzwingen der Arbitrierung einer bestimmten Datenquelle. Auch ist das ereignisgesteuerte Setzen einer Arbitrierungseinheit nicht auf das Beispiel eines Zählers 116 beschränkt sondern kann vielmehr auch für anders umgesetzte Arbitrierungseinheiten vorteilhaft sein.

In einer solchen Ausgestaltung ist also ein flexiblerer Zugriff auf die arbitierten Datenknoten möglich, im Gegensatz zu einer Ausgestaltung mit fest vorgegebener Reihenfolge (und ohne burst-Option) ist aber keine konstante Zykluszeit angebbar. Je nach Anwendung können beide Ausgestaltungsweisen vorteilhaft sein.

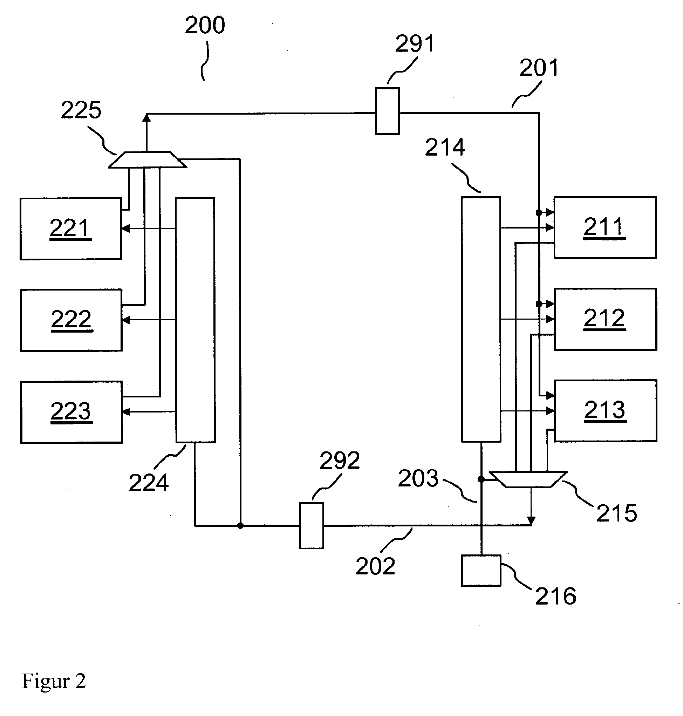

Falls der Zeitraum zur Anforderung und Abspeicherung der Daten innerhalb von einem Taktzyklus nicht ausreicht, ist es in einer weiteren vorteilhaften Ausgestaltung des erfindungsgemäßen Datenaustauschs möglich, in den Adresspfad bzw. in die Kommunikationsverbindung 101 zur Anforderung und / oder in den Daten-Bereitstellungspfad bzw. in die Kommunikationsverbindung 102 Pipelineregister oder vergleichbare Verzögerungseinheiten einzufügen. In Figur 2 ist eine derartige Ausführungsform einer erfindungsgemäßen Schaltungsanordnung mit Pipelineregistern gezeigt.

Dabei weist die Schaltungsanordnung 200 in Figur 2 analog zur Schaltungsordnung 100 aus Figur 1 die Datensenken 211, 212, 213, die Datenquellen 221, 222 und 223, die Kommunikationsverbindungen 201, 202 und 203, einen 1-aus-m-Dekoder 214, einen 1-aus-n-Dekoder 224, Multiplexer 215 und 225 sowie einen Zähler 216 auf. Die Elemente sind dabei wie zu Figur 1 beschrieben miteinander verknüpft bzw. verbunden. Zusätzlich sind in Figur 2 ein Pipelineregister 291 in die Kommunikationsverbindung 201 und ein Pipelineregister 292 in die Kommunikationsverbindung 202 integriert. Diese Pipelineregister 291 und 292 können eine beliebige Tiefe besitzen, zum Beispiel werden Daten in der Kommunikationsverbindung 102 um A Takte verzögert, während Daten in der Kommunikationsverbindung 101 um B Takte verzögert wird. In diesem Fall muss das Abspeichern der Daten in der ausgewählten Datensenke um A+B Takte verzögert werden. Es ist aber nicht erforderlich, dass der Zähler 116 solange seinen Wert behält, sondern er kann mit jedem Takt weiterzählen und sorgt auch in diesem Fall dafür, dass nach z.B. m Takten alle Senken 111, 112, 113 genau einmal abgefragt wurden.

Die Pipelinestufen können dabei beispielweise in einem hierarchisch aufgebauten Multiplexer auf verschiedene Stufen verteilt werden. Es muss dabei nur darauf geachtet werden, dass jeder Pfad von einem Eingang zum Ausgang des Multiplexers mit genau der gleichen Anzahl von Pipelineregisterstufen verzögert wird. Das gleiche gilt auch für andere Verzögerungsmaßnahmen. Außerdem wichtig ist, dass das Selekt-Signal der ausgewählten Datensenke bei Rückantwort durch die ausgewählte Datenquelle bei einer Pipelineregister-Verzögerung und weiterlaufendem Zähler als ein zweites Selekt-Signal ausgebildet ist und das dieses zweite Selekt-Signal um die Dauer des oben zu Figur 1 beschriebenen Datenaustausch-Vorgangs plus die Verzögerung der Pipelineregister 291 und 292 verzögert wird. Die Ausgestaltung eines zweiten, verzögerten Selekt-Signals der ausgewählten Datensenke bei Rückantwort durch die ausgewählte Datenquelle kann auch unabhängig von der Verwendung von Pipelineregistern oder anderen Verzögerungseinheiten vorteilhaft sein. Entsprechende Ausgestaltungen mit Datenverzögerung durch Pipelineregister und / oder mit der Anpassung von Auswahlsignalen sind ebenfalls vorteilhaft im Fall einer Datenquellen-Arbitrierung.

In einer weiteren Ausgestaltung des erfindungsgemäßen Datenaustauschs ist es möglich, die Menge der Datensenken m in mehrere gleich große oder verschieden große (Teil-)mengen m1, m2 ... mp aufzuteilen und für jede dieser (Teil-)mengen einen Zähler zur parallelen Arbeit bereitzustellen. Es ist also jeder dieser (Teil-)mengen eine Arbitrierungseinheit zugewiesen. Der Vorteil dieser Anordnung besteht darin, dass mehrere Datentransfers gleichzeitig bearbeitet werden können, und der maximal Datendurchsatz der Gesamtanordnung wird durch die größte Teilmenge m1, m2 ... mp bestimmt.

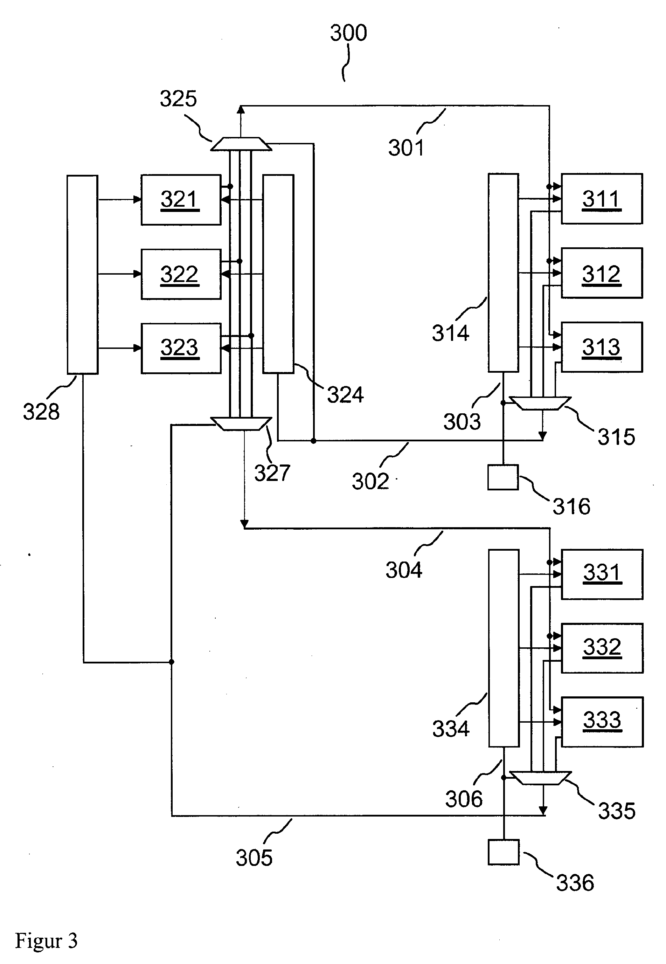

Figur 3 zeigt eine entsprechende Ausgestaltung einer erfindungsgemäßen Schaltungsanordnung in einer Variante mit p=2. Dabei weist die Schaltungsanordnung 300 Datensenken 311, 312, 313, 331, 332 und 333, Datenquellen 321, 322 und 323, einen 1-aus-m1-Dekoder 314, einen 1-aus-m2-Dekoder 334, einen 1-aus-n1-Dekoder 324, einen 1-aus-n2-Dekoder 328, Multiplexer 315, 325, 327 und 335, Zähler 316 und 336 sowie Kommunikationsverbindungen 301-306 auf.

Der 1-aus-m1-Dekoder 314 hat Zugriff auf die Datensenken 311, 312 und 313 und ist über eine Kommunikationsverbindung 303 sowohl mit einem Selekteingang des Multiplexers 315 als auch mit dem Zähler 316 verbunden. Die Datensenken 311, 312 und 313 sind jeweils mit einem Eingang des Multiplexers 315 verbunden. Der Ausgang des Multiplexers 315 ist mit einer Kommunikationsverbindung 302 verbunden, welche Kommunikationsverbindung 302 sowohl mit dem 1-aus-n1-Dekoder 324 als auch mit einem Selekteingang des Multiplexers 325 verbunden ist. Der 1-aus-n1-Dekoder 324 hat Zugriff auf die Datenquellen 321, 322 und 323. Die Datenquellen 321, 322 und 323 sind jeweils mit einem Eingang des Multiplexers 325 und über jeweils die gleiche Kommunikationsverbindung jeweils mit einem Eingang des Multiplexers 327 verbunden. Weiterhin ist der Ausgang des Multiplexers 325 mit einer Kommunikationsverbindung 301 verbunden, welche Kommunikationsleitung 301 jeweils mit den Datensenken 311, 312 und 313 verbunden ist.

Der 1-aus-m2-Dekoder 334 hat Zugriff auf die Datensenken 331, 332 und 333 und ist über eine Kommunikationsverbindung 306 sowohl mit einem Selekteingang des Multiplexers 335 als auch mit dem Zähler 336 verbunden. Die Datensenken 331, 332 und 333 sind jeweils mit einem Eingang des Multiplexers 335 verbunden. Der Ausgang des Multiplexers 335 ist mit einer Kommunikationsverbindung 305 verbunden, welche Kommunikationsverbindung 305 sowohl mit dem 1-aus-n2-Dekoder 328 als auch mit einem Selekteingang des Multiplexers 327 verbunden ist. Der 1-aus-n2-Dekoder 328 hat Zugriff auf die Datenquellen 321, 322 und 323. Der Ausgang des Multiplexers 327 ist mit einer Kommunikationsverbindung 304 verbunden, welche Kommunikationsleitung 304 jeweils mit den Datensenken 331, 332 und 333 verbunden ist.

Mit zwei Zählern 316 und 336 ist es in diesem Ausgestaltungsbeispiel möglich, die gleiche oder jeweils eine (Teil-)menge n1 und n2 der Datenquellen 321, 322, 323 von den zwei (Teil-)mengen der Datensenken 311, 312, 313 bzw. 331, 332, 333 auszuwählen. Da ein Lesen von der gleichen Datenquelle gleichzeitig prinzipiell möglich ist, können zwei unterschiedliche Senken das gleiche Datum verarbeiten. Erfolgt der Lesezugriff zur gleichen Datenquelle zeitlich nacheinander, so ist der zweite Lesevorgang entweder ungültig oder die Daten sind möglicherweise verschieden, weil die Datenquelle inzwischen neue Daten bereitgestellt hat.

Bei gleichzeitigem Zugriff auf eine gleiche Datenquelle durch verschiedene Datensenken würde es im gezeigten Ausführungsbeispiel zu einem Kollisionsproblem kommen. Daher muss entweder ein solcher Fall ausgeschlossen werden (z.B. durch Abstimmung der Arbitrierung der verschiedenen (Teil-)mengen oder z.B. dadurch, dass jede Quelle nur aus einer der Datensenkenteilmengen oder gar nur von einer bestimmten Datensenke abgefragt wird) oder die Schaltungsanordnung muss angepasst werden, z.B. im Vergleich zum hier gezeigten Ausführungsbeispiel durch weitere Datenquellen-Ausgänge plus entsprechende Verbindungen.

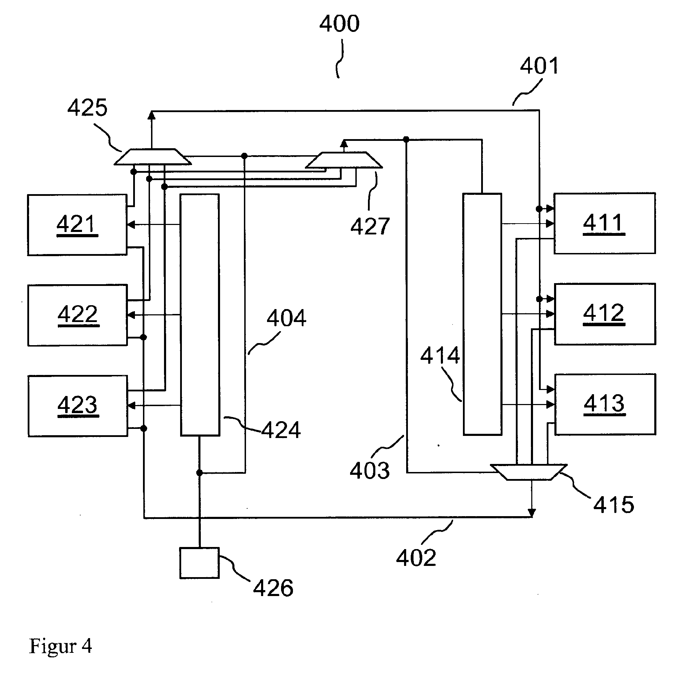

Anstelle der Auswahl der m Datensenken 111, 112, 113 durch den Zähler 116 und den 1-aus-m-Dekoder 115 in Figur 1 ist es umgekehrt auch möglich, die n Datenquellen zu arbitrieren. Figur 4 zeigt dementsprechend eine Ausgestaltung einer erfindungsgemäßen Schaltungsanordnung. Dabei weist die Schaltungsanordnung 400 Datensenken 411, 412, 413, Datenquellen 421, 422, 423, Kommunikationsverbindungen 401, 402, 403 und 404, einen 1-aus-m-Dekoder 414, einen 1-aus-n-Dekoder 424, Multiplexer 415, 425 und 427 sowie einen Zähler 426 auf. Der 1-aus-m-Dekoder 414 hat Zugriff auf die Datensenken 411, 412 und 413. Die Datensenken 411, 412 und 413 sind jeweils mit einem Eingang des Multiplexers 415 verbunden. Der Ausgang des Multiplexers 415 ist mit einer Kommunikationsverbindung 402 verbunden, welche Kommunikationsverbindung 402 mit den Datenquellen 421, 422 und 423 verbunden ist. Der 1-aus-n-Dekoder 424 hat Zugriff auf die Datenquellen 421, 422 und 423 und ist über eine Kommunikationsverbindung 404 mit einem Selekteingang des Multiplexers 425, einem Selekteingang des Multiplexers 427 und mit dem Zähler 426 verbunden. Die Datenquellen 421, 422 und 423 sind jeweils mit einem Eingang des Multiplexers 425 und über jeweils die gleich Kommunikationsverbindungen mit jeweils einem Eingang des Multiplexers 427 verbunden. Weiterhin ist der Ausgang des Multiplexers 425 mit einer Kommunikationsverbindung 401 verbunden, welche Kommunikationsleitung 401 jeweils mit den Datensenken 111, 112 und 113 verbunden ist. Außerdem ist der Ausgang des Multiplexers 427 über eine Kommunikationsleitung 403 mit dem 1-aus-m-Dekoder 414 und einem Selekteingang des Multiplexers 415 verbunden.

Die Funktionsweise der Multiplexer, der Decoder bzw. des Zählers sind analog zu der Beschreibung der Datensenken-Arbitrierung zu Figur 1. In dieser Ausgestaltung (Schaltungsanordnung 400) werden nun aber alle Datenquellen 421, 422, 423 nacheinander in festgelegter Reihenfolge, in dieser Ausgestaltung durch den Zähler 426, arbitriert / ausgewählt, unabhängig davon, ob die jeweilige Quelle über ein Datum verfügt und damit verbunden eine Schreibanforderung (bzw. ein Anforderungssignal) hat, was durch die oben erläuterte Gültigkeitsinformation bedingt ist. Die jeweils ausgewählte Datenquelle überträgt an alle Datensenken 411, 412, 413 die bereitgestellten Daten zusammen mit dem oben erwähnten Gültigkeitssignal über die Kommunikationsleitung 401 zu allen Datensenken und zusätzlich eine Adresse über die Kommunikationsleitung 403 zum 1-aus-m-Dekoder 414. Die damit ausgewählte Datensenke erhält ein aus der Adresse gebildetes Selektsignal. Das an der Datensenke vorhandene Bereitschaftssignal (read request) gibt an, ob die Datensenke bereit ist zum Empfang neuer Daten. Aus der Gültigkeitsinformation des mit-übertragenen Gültigkeitssignals und der Bereitschaft der Senke zum Übernehmen der Daten wird ein write-Signal generiert. Mit diesem write-Signal werden die Daten in den Speicher übernommen und gleichzeitig wird das Read-Request-Signal der ausgewählten Datensenke zurückgesetzt. Gleichzeitig ist das write-Signal das Quittungssignal der erfolgreichen Übertragung und wird von der ausgewählten Datensenke an die ausgewählte Datenquelle zurückgesendet, um dort die Gültigkeitsinformationen zu beeinflussen, konkret um das Datum als gelesen zu markieren und damit die Schreibanforderung zurückzusetzen.

Auch in dieser Ausgestaltung einer Arbitrierung der Quellen 421, 422, 423 ist eine Verzögerung der Signale über Pipelinestufen oder andere Verzögerungsmechanismen möglich, wie zu Figur 2 beschrieben. Dabei ist zu beachten, dass das Selektsignal der Datenquelle zur Bildung des Markierungssignals "gelesen" um so viele Takte verzögert wird, wie der Datenweg zur Datensenke zusammen mit dem zurückübertragenen Quittungssignal verzögert wird. Dieses verzögerte Selektsignal wird mit dem Quittungssignal verknüpft, um eine Markierung vorzunehmen. Damit ist eine Markierung der richtigen Quelle im Falle einer Verzögerung durch Pipelinestufen auch dann möglich, wenn inzwischen schon weitere Datenquellen durch den Arbiter (Zähler) 426 bedient werden.

Auch im Ausgestaltungsbeispiel der Arbitrierung der Datenquellen 421, 422, 423 in Figur 4 ist es möglich, dass ein Datum an mehrere der Datensenken 411, 412, 413 übertragen wird. Zusätzlich mit der Adresse muss dann das Anforderungssignal als ein Write-Request-Signal mit mindestens zwei Bits x und y übertragen werden, wie Tabelle 2 beispielsweise zeigt. Dabei ist die Write Request der Quelle das Anforderungssignal und die Read Request der Senke das Quittungssignal.

Tabelle 2 ist für Datenquellen-Arbitrierung analog wie Tabelle 1 für Datensenken-Arbitrierung. Im Fall des Wertes 0 liegt keine Anforderung vor, von der Datenquellen werden keine Daten bereitgestellt/ die Daten der Datenquellen sind nicht gültig. Im Fall des Wertes 1 findet ein Datenaustausch statt wie zu Figur 4 beschrieben. Damit wäre eine einfache Anforderungssignal-Bildung z.B. auch durch 1 Bit (0 "no request", 1 "single write") denkbar. Die weiteren Werte 2 und 3 der 2-Bit-Variante für das Anforderungssignal im Ausgestaltungsbeispiel der Quellen-Arbitrierung erlauben z.B. die Implementation der Optionen Burst write und Multiple write.

**Tabelle 2: Möglichkeit der Codierung von Write Request Bits x und y bei Arbitrierung der Datenquelle**

| Wert | x y | Name | Bedeutung |
|---|---|---|---|
| 0 | 0 0 | No request | keine Daten bereitgestellt von Datenquelle |
| 1 | 0 1 | Single write | Bereitgestellte Daten werden nach write-Signal (Quittung) der Senke in Quelle als gelesen markiert. |
| 2 | 1 0 | Burst write | Bereitgestellte Daten werden nach der Quittung der Senke in der Quelle ungültig; neue Daten werden unmittelbar bereitgestellt und übertragen; Zähler zur Arbitrierung wird nicht inkrementiert. |
| 3 | 1 1 | Multiple write | Angeforderte Daten bleiben nach Bereitstellung in Quelle gültig. |

Im Fall der Burst-write-Option werden bereitgestellte Daten nach der Quittung der Senke in der Quelle ungültig, neue Daten werden unmittelbar bereitgestellt und übertragen. Dazu kann ggf. auch eine neue Adresse übertragen werden, wenn die Datenquelle an verschiedene Senken übertragen möchte. Der Zähler wird bei einem Burst-write-Vorgang nicht inkrementiert bzw. die Arbitrierung wird nicht weitergeschaltet, was in diesem Ausgestaltungsbeispiel wiederum zu einem Verlust der vorteilhaften konstanten Zykluszeit zugunsten einer flexibleren Datenübertragung führt, wie oben im Fall des Burst read beschrieben. Für die Option Multiple write bleiben die angeforderten Daten nach Bereitstellung in der Quelle gültig.

Auch im Falle der Arbitrierung der Datenquellen 421, 422, 423 besteht die Möglichkeit der Unterteilung in mehrere parallel arbeitende Anordnungen. Dazu werden die Datenquellen in mehrere (Teil-)mengen unterteilt und jeder (Teil-)menge wird eine Arbitrierungseinheit, z.B. ein Zähler zugewiesen, welche in diesen (Teil-)mengen jeweils eine Datenquelle auswählt. Die Übertragung zu den Datensenken 411, 412, 413 erfolgt dann auf parallelen Daten- bzw. Adressbussen. Allgemein gelten alle Ausgestaltungsbeispiele (z.B. Pipelining, mehrfache parallele Anordnungen, dynamische Arbitrierung, variabler Zähler-Code, zweites Selekt-Signal) genauso für einen erfindungsgemäßen Datenaustausch im Falle der Quellen- wie im Falle der Senken-Arbitrierung.

## Patentansprüche

1. Verfahren zur Steuerung eines Datenaustauschs zwischen mindestens einer Menge von Datensenken (111, 112, 113) und mindestens einer Menge von Datenquellen (121, 122, 123) in einer Schaltungsanordnung (100), wobei die Schaltungsanordnung (100) mindestens eine Arbitrierungseinheit (116) aufweist, **gekennzeichnet durch** folgende Schritte:
- die Arbitrierungseinheit (116) wählt nach einer vorgegebenen Reihenfolge eine erste Datensenke aus der Menge von Datensenken (111, 112, 113) aus,
- die erste Datensenke gibt eine Adresse einer ersten Datenquelle und ein Anforderungssignal aus,
- die Adresse wird zur Auswahl der ersten Datenquelle aus der Menge von Datenquellen (121, 122, 123) verwendet,
- die erste Datenquelle gibt Daten und mindestens ein Gültigkeitssignal aus,
- die Daten werden zu allen Datensenken (111, 112, 113) der Menge von Datensenken (111, 112, 113) weitergeleitet,
- die erste Datensenke speichert die Daten ab,
wobei die Arbitrierungseinheit (116, 426) im Fall eines vorgegebenen Ereignisses eine bestimmte Datensenke bzw. eine bestimmte Datenquelle arbitriert und dass nach dieser erzwungenen Arbitrierung die Arbitrierungseinheit (116, 426) Datensenken (111, 112, 113) bzw. Datenquellen (421, 422, 423) weiter nach der vorgegebenen Reihenfolge auswählt.

2. Verfahren zur Steuerung eines Datenaustauschs zwischen mindestens einer Menge von Datensenken (411, 412, 413) und mindestens einer Menge von Datenquellen (421, 422, 423) in einer Schaltungsanordnung (400), wobei die Schaltungsanordnung (400) mindestens eine Arbitrierungseinheit (426) aufweist, **gekennzeichnet durch** folgende Schritte:
- die Arbitrierungseinheit (426) wählt nach einer vorgegebenen Reihenfolge eine erste Datenquelle aus der Menge von Datenquellen (421, 422, 423) aus,
- die erste Datenquelle überträgt an alle Datensenken (411, 412, 413) der Menge von Datensenken (411, 412, 413) in der ersten Datenquelle bereitgestellte Daten zusammen mit einem Gültigkeitssignal einer ersten Datensenke und eine Adresse an eine Auswahleinheit (414),
- die Adresse wird zur Auswahl der ersten Datensenke aus der Menge von Datensenken (411, 412, 413) verwendet,
- in Abhängigkeit von dem Gültigkeitssignal und einer Bereitschaftsinformation der ersten Datensenke werden die Daten in der ersten Datensenke gespeichert und die Bereitschaftinformation der ersten Datensenke wird angepasst,
- an die erste Datenquelle wird ein Quittungssignal einer erfolgreichen Übertragung geschickt,
wobei die Arbitrierungseinheit (116, 426) im Fall eines vorgegebenen Ereignisses eine bestimmte Datensenke bzw. eine bestimmte Datenquelle arbitriert und dass nach dieser erzwungenen Arbitrierung die Arbitrierungseinheit (116, 426) Datensenken (111, 112, 113) bzw. Datenquellen (421, 422, 423) weiter nach der vorgegebenen Reihenfolge auswählt.

3. Verfahren nach einem der Ansprüche 1 und 2, **dadurch gekennzeichnet, dass** mindestens ein Datenknoten sowohl als mindestens eine Datensenke als auch als mindestens eine Datenquelle fungiert.

4. Verfahren nach Anspruch 1, **dadurch gekennzeichnet, dass** der Datenaustausch zwischen mindestens zwei Mengen von Datensenken und mindestens der einen Menge von Datenquellen stattfindet und jeder Menge von Datensenken jeweils mindestens eine Arbitrierungseinheit (316, 336) zugewiesen ist.

5. Verfahren nach Anspruch 2, **dadurch gekennzeichnet, dass** der Datenaustausch zwischen mindestens zwei Mengen von Datenquellen und mindestens der einen Menge von Datensenken stattfindet und jeder Menge von Datenquellen jeweils mindestens eine Arbitrierungseinheit zugewiesen ist.

6. Verfahren nach einem der Ansprüche 4 und 5, **dadurch gekennzeichnet, dass** verschiedenen Arbitrierungseinheiten (316, 336) zugewiesene Mengen sich überschneiden können.

7. Verfahren nach Anspruch 1, **dadurch gekennzeichnet, dass** das Anforderungssignal der ersten Datensenke eine Gültigkeitsinformation der ersten Datenquelle beeinflusst.

8. Verfahren nach Anspruch 2, **dadurch gekennzeichnet, dass** das Quittungssignal der ersten Datensenke eine Gültigkeitsinformation der ersten Datenquelle beeinflusst.

9. Verfahren nach einem der vorangegangenen Ansprüche, **dadurch gekennzeichnet, dass** ein Lese-Anforderungssignal oder ein Schreibanforderungssignal sich auf ein Weiterschalten der Arbitrierungseinheit (116, 426) auswirkt.

10. Verfahren nach einem der vorangegangenen Ansprüche, **dadurch gekennzeichnet, dass** Daten durch Verzögerungseinheiten (291, 292) verzögert werden.

## Claims

1. Method for controlling a data interchange between at least one set of data sinks (111, 112, 113) and at least one set of data sources (121, 122, 123) in a circuit arrangement (100), wherein the circuit arrangement (100) has at least one arbitration unit (116), **characterized by** the following steps:
- the arbitration unit (116) selects a first data sink from the set of data sinks (111, 112, 113) in accordance with a prescribed order,
- the first data sink outputs an address for a first data source and a request signal,
- the address is used to select the first data source from the set of data sources (121, 122, 123),
- the first data source outputs data and at least one validity signal,
- the data are forwarded to all the data sinks (111, 112, 113) in the set of data sinks (111, 112, 113),
- the first data sink stores the data,
wherein the arbitration unit (116, 426) arbitrates a particular data sink or a particular data source in the case of a prescribed event and after this enforced arbitration the arbitration unit (116, 426) continues to select data sinks (111, 112, 113) and data sources (421, 422, 423) in accordance with the prescribed order.

2. Method for controlling a data interchange between at least one set of data sinks (411, 412, 413) and at least one set of data sources (421, 422, 423) in a circuit arrangement (400), wherein the circuit arrangement (400) has at least one arbitration unit (426), **characterized by** the following steps:
- the arbitration unit (426) selects a first data source from the set of data sources (421, 422, 423) in accordance with a prescribed order,
- the first data source transmits data provided in the first data source together with a validity signal for a first data sink to all the data sinks (411, 412, 413) in the set of data sinks (411, 412, 413) and an address to a selection unit (414),
- the address is used to select the first data sink from the set of data sinks (411, 412, 413),
- the validity signal and a piece of standby information from the first data sink are taken as a basis for storing the data in the first data sink, and the piece of standby information from the first data sink is adjusted,
- an acknowledgement signal from a successful transmission is sent to the first data source,
wherein the arbitration unit (116, 426) arbitrates a particular data sink or a particular data source in the case of a prescribed event and after this enforced arbitration the arbitration unit (116, 426) continues to select data sinks (111, 112, 113) and data sources (421, 422, 423) in accordance with the prescribed order.

3. Method according to either of Claims 1 and 2, **characterized in that** at least one data node acts both as at least one data sink and as at least one data source.

4. Method according to Claim 1, **characterized in that** the data interchange takes place between at least two sets of data sinks and at least the one set of data sources, and each set of data sinks has at least one respective associated arbitration unit (316, 336).

5. Method according to Claim 2, **characterized in that** the data interchange takes place between at least two sets of data sources and at least the one set of data sinks, and each set of data sources has at least one respective associated arbitration unit.

6. Method according to either of Claims 4 and 5, **characterized in that** sets associated with different arbitration units (316, 336) can overlap.

7. Method according to Claim 1, **characterized in that** the request signal from the first data sink influences a piece of validity information from the first data source.

8. Method according to Claim 2, **characterized in that** the acknowledgement signal from the first data sink influences a piece of validity information from the first data source.

9. Method according to one of the preceding claims, **characterized in that** a read request signal or a write request signal affects advancement of the arbitration unit (116, 426).

10. Method according to one of the preceding claims, **characterized in that** data are delayed by delay units (291, 292).

## Revendications

1. Procédé de commande de l'échange de données entre au moins un certain nombre de drains (111, 112, 113) de données et au moins un certain nombre de sources (121, 122, 123) de données dans un circuit (100),
le circuit (100) présentant au moins une unité d'arbitrage (116),
le procédé étant **caractérisé par** les étapes suivantes :
l'unité d'arbitrage (116) sélectionne dans une succession prédéterminée un premier drain de données dans l'ensemble de drains (111, 112, 113) de données,
le premier drain de données délivre l'adresse d'une première source de données et un signal de demande,
l'adresse est utilisée pour sélectionner la première source de données dans l'ensemble de sources (121, 122, 123) de données,
la première source de données délivre des données et au moins un signal de validité,
les données sont transmises à tous les drains (111, 112, 113) de données de l'ensemble de drains (111, 112, 113) de données et
le premier drain de données conserve les données,
l'unité d'arbitrage (116, 426) arbitrant lorsqu'un événement prédéterminé survient sur un drain de données défini ou une source de données définie et après cet arbitrage obligatoire, l'unité d'arbitrage (116, 426) sélectionnant selon la succession prédéterminée des drains de données (111, 112, 113) ou des sources de données (421, 422, 423).

2. Procédé de commande de l'échange de données entre au moins un certain nombre de drains (411, 412, 413) de données et au moins un certain nombre de sources (421, 422, 423) de données dans un circuit (400),
le circuit (400) présentant au moins une unité d'arbitrage (426),
le procédé étant **caractérisé par** les étapes suivantes :
l'unité d'arbitrage (426) sélectionne selon une succession prédéterminée une première source de données dans l'ensemble de sources (421, 422, 423) de données,
la première source de données transmet à tous les drains (411, 412, 413) de données de l'ensemble de drains (411, 412, 413) de données les données préparées dans la première source de données en même temps qu'un signal de validité d'un premier drain de données et une adresse à une unité de sélection (414),
l'adresse est utilisée pour sélectionner le premier drain de données dans l'ensemble de drains (411, 412, 413) de données,
en fonction du signal de validité et d'une information indiquant que le premier drain de données est disponible, les données sont conservées dans le premier drain de données et l'information indiquant que le premier drain de données est disponible est adaptée,
un signal de confirmation que le transfert s'est bien effectué est délivré à la première source de données,
l'unité d'arbitrage (116, 426) arbitrant lorsqu'un événement prédéterminé survient sur un drain de données défini ou une source de données définie et après cet arbitrage obligatoire, l'unité d'arbitrage (116, 426) sélectionnant selon la succession prédéterminée des drains de données (111, 112, 113) ou des sources de données (421, 422, 423).

3. Procédé selon l'une des revendications 1 et 2, **caractérisé en ce qu'**au moins un noeud de données joue à la fois le rôle du ou des drains de données et celui de la ou des sources de données.

4. Procédé selon la revendication 1, **caractérisé en ce que** l'échange de données a lieu entre au moins deux ensembles de drains de données et au moins le ou les ensembles de sources de données et **en ce qu'**au moins une unité d'arbitrage (316, 336) est attribuée à chaque ensemble de drains de données.

5. Procédé selon la revendication 2, **caractérisé en ce que** l'échange de données a lieu entre au moins deux ensembles de sources de données et au moins le ou les ensembles de drains de données et **en ce qu'**au moins une unité d'arbitrage est attribuée à chaque ensemble de sources de données.

6. Procédé selon l'une des revendications 4 et 5, **caractérisé en ce que** les ensembles attribués à différentes unités d'arbitrage (316, 336) peuvent s'intersecter.

7. Procédé selon la revendication 1, **caractérisé en ce que** le signal de demande du premier drain de données agit sur une information de validité de la première source de données.

8. Procédé selon la revendication 2, **caractérisé en ce que** le signal de confirmation du premier drain de données agit sur une information de validité de la première source de données.

9. Procédé selon l'une des revendications précédentes, **caractérisé en ce qu'**un signal de demande de lecture ou un signal de demande d'écriture agit sur le maintien du branchement de l'unité d'arbitrage (116, 426).

10. Procédé selon l'une des revendications précédentes, **caractérisé en ce que** des données sont ralenties par des unités de ralentissement (291, 292).
